# EUROPEAN PATENT SPECIFICATION

(11) **EP 4 666 542 B1**
(45) Date of publication and mention of the grant of the patent: **09.12.2026**
(21) Application number: 24705770.6
(22) Date of filing: 14.02.2024
(51) Int. Cl.: H04L 9/40, H04W 76/11, H04W 28/24

(54) **METHOD AND APPARATUS FOR GENERATING QOS (QUALITY OF SERVICE) RULES FOR PACKET COMMUNICATION**
VERFAHREN UND VORRICHTUNG ZUM ERZEUGEN VON QOS-REGELN (QUALITY OF SERVICE) FÜR PAKETKOMMUNIKATION
PROCÉDÉ ET APPAREIL POUR GÉNÉRER DES RÈGLES DE QOS (QUALITÉ DE SERVICE) POUR UNE COMMUNICATION PAR PAQUETS

(30) Priority: 14.02.2023 US 202363445336 P
(43) Date of publication of application: 24.12.2025
(73) Proprietor: Telefonaktiebolaget LM Ericsson (publ), 164 83 Stockholm (SE)
(72) Inventor: SEDLACEK, Ivo, 250 64 Hovorcovice (CZ); AXELL, Jörgen, 182 39 DANDERYD (SE)
(74) Representative: Ericsson
(86) International application number: PCT/IB2024/051391
(87) International publication number: WO 2024/171084

(56) References cited:
- WO-A1-2022/143399
- US-A1- 2021 306 912
- "3rd Generation Partnership Project; Technical Specification Group Services and System Aspects; System architecture for the 5G System (5GS); Stage 2 (Release 18)", vol. SA WG2, no. V18.0.0, 21 December 2022 (2022-12-21), pages 1 - 593, XP052234745, Retrieved from the Internet <URL:https://www.3gpp.org/ftp/Specs/archive/23_series/23.501/> [retrieved on 20221221]

## Description

### Related Application

This patent application claims priority to United States provisional patent application no. 63/445,336 filed on February 14, 2023.

### Technical Field

This disclosure relates to communication devices, and more particularly to QoS (Quality of Service) rules for packet communication by communication devices.

### Background

IPsec (Internet Protocol Security) can be used to authenticate and encrypt data packets to provide secure encrypted communication between two computers over an IP (Internet Protocol) network. IPsec is a network protocol suite that includes various protocols to perform different functions:
- AH (Authentication Header) which can provide connectionless data integrity and data origin authentication for IP datagrams and provide protection against replay attacks,
- ESP (Encapsulating Security Payload) which can provide confidentiality, connectionless data integrity, data origin authentication, an anti-replay service, and limited traffic-flow confidentiality, and
- ISAKMP (Internet Security Association and Key Management Protocol) which can provide a framework for authentication and key exchange, to generate an SA (Security Association) for AH and/or ESP operations.

In a 5G (Fifth Generation) system, a derived QoS (Quality of Service) can be specified for various IP packets including ESP packets. For such derived QoS, downlink ESP packets can contain an SPI (Security Parameters Index) of the downlink IPsec SA, and uplink ESP packets can likewise contain an SPI of the uplink IPsec SA.

A NAS (Non-Access Stratum) layer can create derived QoS rules for the uplink ESP packets based on the downlink ESP packets that are received. However, the NAS layer would need to know which uplink IPsec SA corresponds to which downlink IPsec SA. Unfortunately, in some instances, the NAS layer might not know which uplink IPsec SA corresponds to which downlink IPsec SA.

More generally, a second layer (e.g. NAS layer) at a lower level than a first layer (e.g. application layer) might not always know which uplink SA corresponds to which downlink SA. Without knowing which uplink SA corresponds to which downlink SA, the second layer might not be able to generate QoS rules for uplink packets.
The non-patent literature "3rd Generation Partnership Project; Technical Specification Group Services and System Aspects; System architecture for the 5G System (5GS); Sate 2 (Release 18)", 3GPP STANDARD; 3GPP TS 23.501, 3rd GENERATION PARTNERHSIP PROJECT (3GPP), vol. SA WG2, no. V18.0.0 21 December 2022 (2022-12-21), pages 1-593, XP052234745, Retrieved from the Internet: URL https://ftp.3gpp.org/Specs/archive/23 series/23.501 [retrieved on 2022-12-21], 3GPP TS 23.501 V18.0.0 discloses the stage-2 system architecture for the 5G System (5GS) is a specification that specifies that QoS handling in the UE can include "reflective QoS", where the NAS layer derives uplink QoS rules from received downlink packets. IPsec, in particular ESP-protected traffic, is often used by applications or OTT services running above NAS to secure user-plane packets with separate uplink and downlink Security Associations (SAs). However, when these IPsec SAs are created and managed at an upper layer (e.g. application layer), the NAS layer may not know which uplink SA corresponds to which downlink SA, and this correspondence may change over time. Without knowledge of this correspondence, the NAS layer cannot correctly generate or maintain derived QoS rules for uplink ESP packets, which can lead to sub-optimal QoS handling for secure packet flows.
WO 2022/143399 A1 provides a method in a terminal device. The method includes: receiving 310 a downlink, DL, packet, the DL packet being Internet Protocol "IP" Security, IPSec, protected; and deriving 320 a reflective Quality of Service, QoS, rule for uplink, UL, direction per IPSec Security Association, SA, based on the DL packet.
US 2021/306912 provides the means for controlling the derivation of QoS rules in the UE by flexibly defining the scope of packet header fields over which packet filter derivation is performed. The scope of packet header fields for derivation of QoS rules may be provided by the network to the UE upon PDU Session establishment or modification. For PDU Session of IP type, the network indicates to the UE whether the scope of RQoS includes both the Source/Destination IP address pair and the Source/Destination Port numbers, or only the former. For PDU Session of Ethernet type, the network indicates to the UE whether the scope of RQoS includes both the Source/Destination MAC address pair and the IEEE 802.1Q tag, or only the former. The UE may indicate to the network whether it supports the flexible scope of packet filters for RQoS for a PDU session.

### Summary

The present disclosure provides a method according to claim 1, a non-transitory computer readable medium according to claim 14, and a communication device according to claim 15. Preferred embodiments are defined in the dependent claims and herein below. According to an aspect, there is provided a method for execution by a communication device having abstraction layers including a first layer (e.g. application layer) and a second layer (e.g. NAS layer) at a lower level than the first layer. The method involves the first layer provisioning a downlink SA (Security Association) and an uplink SA for a logical connection. The communication device might have multiple logical connections with other hosts via a network, with each logical connection having its own uplink SA and downlink SA. Unfortunately, the second layer might not always know which uplink SA corresponds to which downlink SA, especially if the uplink SA and/or the downlink SA are generated by the first layer, and moreover such correspondence might change over time. Without such correspondence information, the second layer might not be able to generate QoS rules for uplink packets over the logical channels.

The correspondence information is known to the first layer of the communication device. Therefore, in accordance with an embodiment of the disclosure, the method involves the first layer sending a message to the second layer indicating the correspondence information for the downlink SA and the uplink SA. In this way, the second layer can become aware of the correspondence information. In accordance with another embodiment of the disclosure, upon the communication device receiving downlink packets from the network in the logical connection, the second layer generate QoS rules for uplink packets based on a combination of the correspondence information and the downlink packets, such that uplink packets can be transmitted in accordance with those QoS rules.

In some implementations, the message includes an SPI of the downlink SA and an SPI of the uplink SA, thereby identifying the downlink SA and the uplink SA. In some implementations, the correspondence information indicates one of (a) no uplink SA corresponds to any downlink SA, (b) the uplink SA corresponds to the downlink SA, and (c) the uplink IPsec SA no longer corresponds to the downlink IPsec SA. However, other implementations are possible.

In some implementations, the first layer informs the second layer of any changes in correspondence, which can occur on an ongoing basis. This enables the second layer to update the QoS rules based on any changes in correspondence. Thus, uplink packets can be sent in accordance with the QoS rules that have been updated.

In some implementations, the first layer is an application layer and the second layer is an NAS layer. In some implementations, each SA is an IPsec SA, and each packet is an ESP packet. However, other implementations are possible.

According to another aspect, there is provided a non-transitory computer readable medium having recorded thereon statements and instructions that, when executed by a processor of a communication device, configure the processor to implement a method as summarized above.

According to another aspect, there is provided a communication device. The communication device has abstraction layers circuitry implementing a plurality of abstraction layers including a first layer (e.g. application layer) and a second layer (e.g. NAS layer) at a lower level than the first layer. The communication device also has a network interface coupled to the abstraction layers circuitry and configured to communicate with a network. In accordance with an embodiment of the disclosure, the communication device also has correspondence conveying circuitry coupled to the abstraction layers circuitry and configured to implement a method as summarized above.

Other aspects and features of the present disclosure will become apparent, to those ordinarily skilled in the art, upon review of the following description of the various embodiments of the disclosure.

### Brief Description of the Drawings

Embodiments will now be described with reference to the attached drawings in which:
Figure 1 is a block diagram of a communication system having a communication device and a network;
Figure 2 is a sequence diagram of a method for generating QoS rules for upload packets;
Figure 3 is a schematic of an example cellular communications system in which some embodiments of the present disclosure might be implemented;
Figures 4A and 4B are block diagrams of a wireless communication system represented as a 5G network architecture in which some embodiments of the present disclosure might be implemented;
Figures 5A and 5B are block diagrams of a wireless communication device according to some embodiments of the present disclosure; and
Figure 6 is a schematic of an example communication system according to some embodiments of the present disclosure.

### Detailed Description

It should be understood at the outset that although illustrative implementations of one or more embodiments of the present disclosure are provided below, the disclosed systems and/or methods might be implemented using any number of techniques. The disclosure should in no way be limited to the illustrative implementations, drawings, and techniques illustrated below, including the exemplary designs and implementations illustrated and described herein, but might be modified within the scope of the appended claims along with their full scope of equivalents.

### Introduction

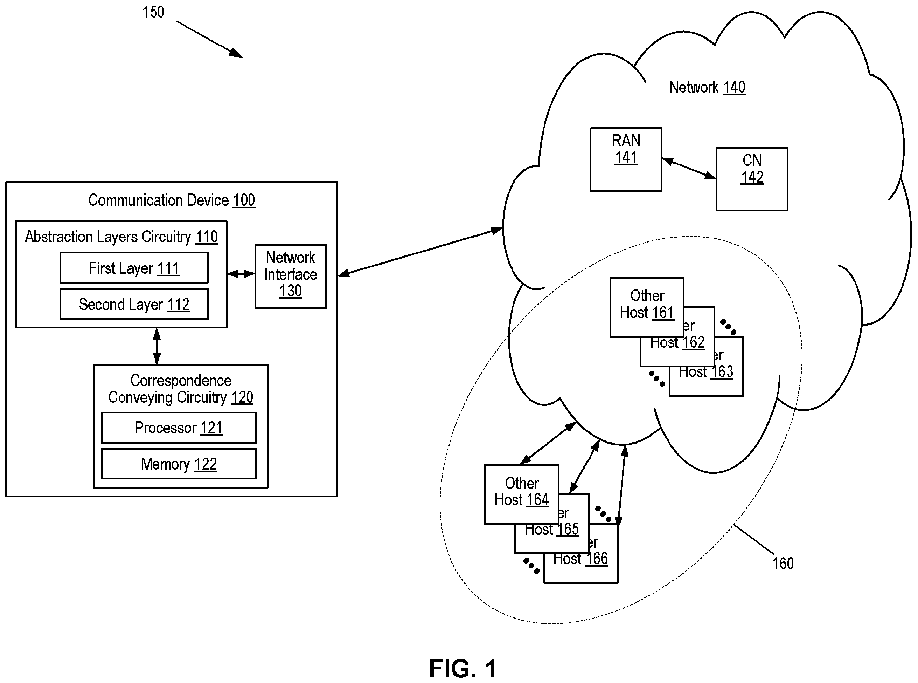

Referring first to Figure 1, shown is a block diagram of a communication system 150 having a communication device 100 operatively coupled to at least one other host 160 via a network 140. Details of the network 140 are omitted for simplicity. In some implementations, the network 140 is a 3GPP (3rd Generation Partnership Project) network having a RAN (Radio Access Network) 141 and a CN (Core Network) 142 of a cellular communication system, for example a 5G system. However, other implementations are possible and are within the scope of the disclosure. The at least one other host 160 can include one or more hosts 161-163 within a 3GPP network and/or one or more hosts 164-166 in a data network to which the 3GPP network is connected. Although only one communication device 100 is shown, there might be numerous communication devices operatively coupled to the network 140, but they are not shown for simplicity. Also, the communication device 100 can have additional components that are not shown for simplicity.

There are many possibilities for the communication device 100. In some implementations, the communication device 100 is a mobile device having a wireless access radio 130 for communicating with the network 140, which as noted above can be wireless network such as a 5G system for example. In some implementations, the communication device 100 is a UE (User Equipment) or a TE (Terminal Equipment). In some implementations, the communication device 100 is an IoT (Internet of Things) enabled device which can communicate with the Internet via the network 140. Further example details of the communication device 100 and the network 140 are provided in subsequent sections.

The communication device 100 has a network interface 130 (e.g. wireless access radio) configured to communicate with the network 140. Such communication can occur using one or more logical connections over a physical connection. The physical connection can be wired such as an Ethernet connection for example, or wireless such as a WiFi (Wireless Fidelity) connection or a WWAN (Wireless Wide Area Network) connection for example. A mix of wired and wireless connections are possible.

The communication device 100 also has abstraction layers circuitry 110 implementing a plurality of abstraction layers including a first layer 111 (e.g. application layer) and a second layer 112 (e.g. NAS layer) at a lower level than the first layer 111. Although only two abstraction layers 111-112 are shown, it is noted that there might be several additional layers that are not shown for simplicity. For example, there could be seven layers for OSI (Open Systems Interconnection) implementations, including an application layer, a presentation layer, a session layer, a transport layer, a network layer, a data link layer, and a physical layer, for example. Other implementations are possible.

Regardless of the physical connection(s), the communication device 100 might have multiple logical connections with other hosts 161-166 via the network 140, with each logical connection having its own uplink SA and downlink SA. Unfortunately, the second layer 112 might not always know which uplink SA corresponds to which downlink SA, especially because the second layer 112 might not have generated the uplink SAs and the downlink SAs, and moreover the correspondences might change over time. Without such correspondence information, the second layer 112 might not be able to generate QoS rules for uplink packets. The correspondence information is known to the first layer 111 of the communication device 100, because the first layer 111 has either generated the uplink SAs and the downlink SAs or has otherwise become aware of them and their correspondence.

Therefore, in accordance with an embodiment of the disclosure, the communication device 100 also has correspondence conveying circuitry 120, which implements a method for generating QoS rules for upload packets. Such method involves the first layer 111 sending a message to the second layer 112 indicating the correspondence information for a downlink SA and an uplink SA. In this way, the second layer 112 can become aware of the correspondence information and generate QoS rules for uplink packets based on the correspondence information, and uplink packets can be sent in accordance with those QoS rules.

In some implementations, the correspondence conveying circuitry 120 includes a processor 121 that executes software, which can stem from a memory 122. However, other implementations can include additional or alternative hardware components, such as any appropriately configured FPGA (Field-Programmable Gate Array), ASIC (Application-Specific Integrated Circuit), and/or microcontroller, for example. More generally, the correspondence conveying circuitry 120 can instead be implemented with any suitable combination of hardware, software and/or firmware.

Although the abstraction layers circuitry 110, the correspondence conveying circuitry 120, and the network interface 130 are shown as separate components, it is noted that there might be some overlap between these components. For example, in some implementations, the abstraction layers circuitry 110 includes the same processor 121 from the correspondence conveying circuitry 120 and executes software which again can stem from the same memory 122 from the correspondence conveying circuitry 120. In other words, the abstraction layers circuitry 110 and the correspondence conveying circuitry 120 share components including a processor and a memory having instructions executable by the processor. Other implementations are possible.

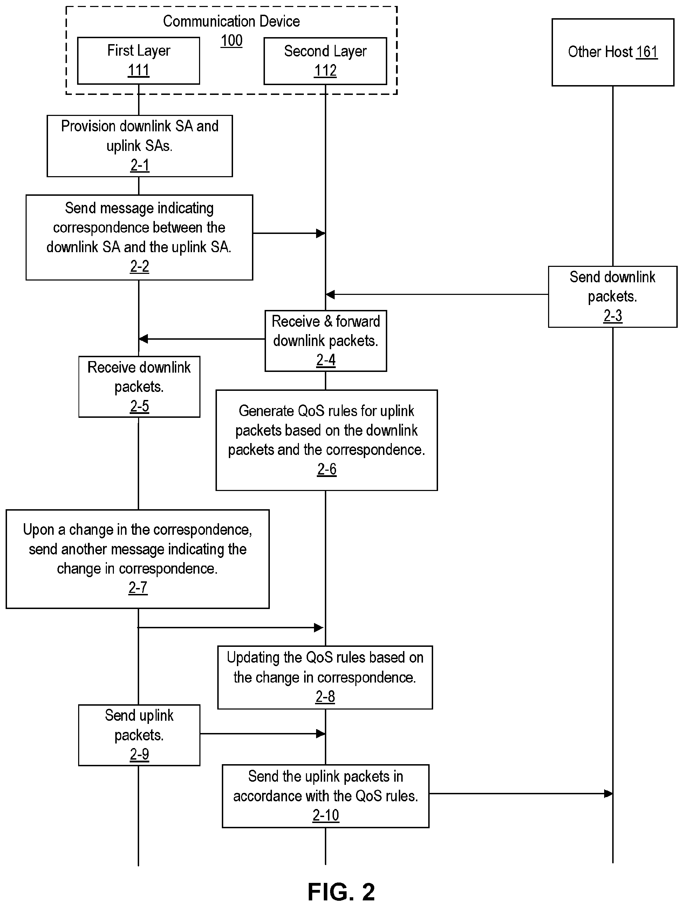

Further example details are provided below with reference to Figure 2, which is a sequence drawing of a method for generating QoS rules for upload packets. Although the method of Figure 2 is described below with reference to the communication device 100 of the communication system 150 shown in Figure 1, it is to be understood that the method of Figure 2 is applicable to other communication systems. In general, the method of Figure 2 is applicable to communication devices in any appropriately configured communication system.

At step 2-1, the first layer 111 of the communication device 100 provisions a downlink SA and an uplink SA for a logical connection with another host 160, for example any one host 161 of the other hosts 161-166 shown in Figure 1. Establishment of the downlink and uplink SAs can for example be done by a configuration of the communication device 100, and/or can be triggered by negotiation between the communication device 100 and the other host 161, where parameters for both the downlink and uplink SAs can be exchanged, and then the first layer 111 of the communication device 100 can create both the downlink and uplink SAs at the same time. In some implementations, the downlink SA and the uplink SA are provisioned by the first layer 111 using IKEv2 (Internet Key Exchange version 2) protocol, although other protocols are possible as well.

The communication device 100 might have multiple logical connections with other hosts 161-166 via the network 140, with each logical connection having its own uplink SA and downlink SA. The downlink and uplink SAs provisioned at step 2-1 could be for one logical connection with one host 161, and there may be additional logical connections with the same host 161 and/or with other hosts 162-166. Unfortunately, the second layer 112 might not always know which uplink SA corresponds to which downlink SA, especially if the uplink SA and/or the downlink SA are generated by the first layer 111 as in the present example, and moreover such correspondence might change over time. Without such correspondence information, the second layer 112 might not be able to generate QoS rules for uplink packets over the logical channels.

The correspondence information is known to the first layer 111 of the communication device 110, especially if the first layer 111 has generated the uplink SA and the downlink SA in step 2-1 as in the present example. Therefore, in accordance with an embodiment of the disclosure, at step 2-2 the first layer 111 sends a message to the second layer 112 indicating the correspondence information for the downlink SA and the uplink SA. The correspondence information can for example indicate that there is an association between the downlink SA and the uplink SA (e.g. new association created), or that there is no such association between the uplink IPsec SA and the downlink IPsec SA (e.g. existing association removed). In this way, the second layer 112 can become aware of the correspondence information for the downlink SA and the uplink SA. In some implementations, the second layer 112 keeps track of the correspondence information for the logical connection with the other host 161, as well as correspondence information for any other logical connections with any other hosts 162-166.

At some later time after the downlink SA and the uplink SA are provisioned for the logical channel with the other host 161, the other host 161 sends download packets to the communication device 100 at step 2-3, which are received by the communication device 100 over the logical channel. In some implementations, the download packets are received by the second layer 112 and forwarded to the first layer 111 at step 2-4, such that the first layer 111 receives the download packets at step 2-5 as shown.

In accordance with another embodiment of the disclosure, at step 2-6 the second layer 112 generates QoS rules based on a combination of the correspondence information received at step 2-2 and the downlink packets received at step 2-4. Different QoS rules could be defined for different types of downlink packets. For example, if the downlink packets are for a real-time communication session (e.g. voice and/or video session), the QoS rules could specify low latency. However, if the downlink packets are for low-priority communication that is not in real-time, the QoS rules could specify a tolerance for higher latency.

Example details of derived QoS rules are described in clauses 6.2.5.1.1.3 and 6.2.5.1.4 of 3GPP TS (Technical Specification) 24.501, "Non-Access-Stratum (NAS) protocol for 5G System (5GS); Stage 3", version 15.7.0 dated 2022-06-24 (hereinafter "3GPP TS 24.501"). As a specific example, if a UE receives a DL user data packet marked with a QFI (QoS Flow ID) and an RQI (Reflective QoS Indication), the DL user data packet belongs to a PDU session of IPv4, IPv6, IPv4v6 or Ethernet PDU session type, and the UE does not have a derived QoS rule with the same packet filter for UL direction as the packet filter for UL direction derived from the DL user data packet as specified in subclause 6.2.5.1.4.2 of 3GPP TS 24.501, then the UE shall create a new derived QoS rule as follows:
a) the QFI of the derived QoS rule is set to the received QFI;
b) the precedence value of the derived QoS rule is set to 80 (decimal); and
c) the packet filter for UL direction of the derived QoS rule is set to the derived packet filter for UL direction;

As noted above, the correspondence might change over time. In some implementations, the first layer 111 informs the second layer 112 of any changes in the correspondence, which can occur on an ongoing basis. For example, at step 2-7, upon a change in the correspondence, the first layer 111 sends another message indicating the change in correspondence. This allows the second layer 112 to update the QoS rules based on the change in correspondence at step 2-8.

Therefore, whenever the communication device 100 is to send packets over the logical connection, it does so in accordance with the QoS rules that are up to date. For example, if the first layer 111 is to send uplink packets at step 2-9, then at step 2-10 the second layer 112 sends the uplink packets in accordance with the QoS rules. In this way, any changes to the QoS rules from step 2-8 would be reflected in the manner in which the uplink packets are sent.

There are many possibilities for the message that is sent at step 2-2. In some implementations, the message is an AT (Attention) command of a set of AT commands that have been defined for controlling transmissions. Specific examples are provided later with reference to Tables 1 and 2. However, other types of messages are possible.

There are many possibilities for the correspondence information provided at step 2-2. The correspondence information can indicate whether and/or how there is an association between the downlink SA and the uplink SA. In some implementations, the correspondence information includes an SPI (Security Parameters Index) of the downlink SA and an SPI of the uplink SA, thereby identifying both the downlink SA and the uplink SA. In specific implementations, the correspondence information includes a set of <SPI of DL IPsec SA, SPI of UL IPsec SA> tuples. In this case, SPI of derived QoS rule can be set to SPI of UL IPsec SA in a tuple with SPI of DL IPsec SA matching the SPI of the received downlink ESP protected IP user data packet. More generally, any suitable identifier(s) for the downlink SA and the uplink SA can be utilized. In some implementations, identifying the downlink SA and the uplink SA implicitly defines that the uplink SA corresponds to the downlink SA. In other implementations, the correspondence information also includes an indication that more explicitly defines whether the uplink SA corresponds to the downlink SA.

In some implementations, the correspondence information includes an indication of one of (a) no uplink SA corresponds to any downlink SA, (b) the uplink SA corresponds to the downlink SA, and (c) the uplink SA no longer corresponds to the downlink SA. Item (a) can indicate an absence of correspondences and can be omitted on other implementations. Item (b) is an indication that explicitly defines that the uplink SA corresponds to the downlink SA. Item (c) is an example of correspondence information that could be utilized in the case of a change in correspondence.

In some implementations, the correspondence information also includes a local IP address. In specific implementations, the correspondence information includes a set of <local IP address, SPI of DL IPsec SA, SPI of UL IPsec SA>. In this case, SPI of derived QoS rule is set to SPI of UL IPsec SA in a tuple:
- with SPI of DL IPsec SA matching the SPI of the received downlink ESP protected IP user data packet; and
- with local IP address matching the destination IP address of the received downlink ESP protected IP user data packet.

In some implementations, the correspondence information also includes a local IP address and a remote IP address. In specific implementations, the correspondence information includes a set of <local IP address, remote IP address, SPI of DL IPsec SA, SPI of UL IPsec SA>. In this case, SPI of derived QoS rule is set to SPI of UL IPsec SA in a tuple:
- with SPI of DL IPsec SA matching the SPI of the received downlink ESP protected IP user data packet;
- with local IP address matching the destination IP address of the received downlink ESP protected IP user data packet; and
- with remote IP address matching the source IP address of the received downlink ESP protected IP user data packet.

In some implementations, the correspondence information also includes a local UDP (User Datagram Protocol) port. In this implementation, the UE is assigned solely one IP address by the network. In specific implementations, the correspondence information includes a set of <local UDP port, SPI of DL IPsec SA, SPI of UL IPsec SA>. In this case, SPI of derived QoS rule is set to SPI of UL IPsec SA in a tuple:
- with SPI of DL IPsec SA matching the SPI of the received downlink ESP protected IP user data packet sent using UDP encapsulation of ESP packets;
- with IP address assigned to the UE by the network matching the destination IP address of the received downlink ESP protected IP user data packet sent using UDP encapsulation of ESP packets; and
- with local UDP port matching the destination UDP port of the received downlink ESP protected IP user data packet sent using UDP encapsulation of ESP packets.

In some implementations, the correspondence information also includes a local UDP (User Datagram Protocol) port. In specific implementations, the correspondence information includes a set of <local IP address, local UDP port, SPI of DL IPsec SA, SPI of UL IPsec SA>. In this case, SPI of derived QoS rule is set to SPI of UL IPsec SA in a tuple:
- with SPI of DL IPsec SA matching the SPI of the received downlink ESP protected IP user data packet sent using UDP encapsulation of ESP packets;
- with local IP address matching the destination IP address of the received downlink ESP protected IP user data packet sent using UDP encapsulation of ESP packets; and
- with local UDP port matching the destination UDP port of the received downlink ESP protected IP user data packet sent using UDP encapsulation of ESP packets.

In some implementations, the correspondence information also includes a local UDP (User Datagram Protocol) port and a remote UDP port. In specific implementations, the correspondence information includes a set of <local IP address, local UDP port, remote IP address, remote UDP port, SPI of DL IPsec SA, SPI of UL IPsec SA>. In this case, SPI of derived QoS rule is set to SPI of UL IPsec SA in a tuple:
- with SPI of DL IPsec SA matching the SPI of the received downlink ESP protected IP user data packet sent using UDP encapsulation of ESP packets;
- with local IP address matching the destination IP address of the received downlink ESP protected IP user data packet sent using UDP encapsulation of ESP packets;
- with remote IP address matching the source IP address of the received downlink ESP protected IP user data packet sent using UDP encapsulation of ESP packets;
- with local UDP port matching the destination UDP port of the received downlink ESP protected IP user data packet sent using UDP encapsulation of ESP packets; and
- with remote UDP port matching the source UDP port of the received downlink ESP protected IP user data packet sent using UDP encapsulation of ESP packets.

In some implementations, the message is sent from the first layer 111 to the second layer 112 without any request by the second layer 112 for the message. In other implementations, the message is sent from the first layer 111 to the second layer 112 in response to a request by the second layer 112 for the message.

There are many possibilities for the second message that is sent at step 2-7. In some implementations, the second message has a same format as the first message that is sent at step 2-5. Thus, the foregoing description of the first message can be applicable to the second message. Likewise, any additional messages for updating the QoS rules can have the same format described above for the first message. In other implementations, the second message and any additional messages might have varying format compared to the first message.

There are many ways in which correspondence might change thereby prompting the second message at step 2-7. The following is an example:
- Step-1: UE starts communicating with other host using ESP and establishes <UL IPsec SA, DL IPsec SA>.
- Step-2: after some time, the UE stops communication and triggers releases of both UL IPsec SA, DL IPsec SA.
- Step-3: after some time, the UE starts communicating with the same other host again. In IKEv2 negotiation, the UE can use the same SPI of the DL IPsec SA but the other host selects a new SPI of the UL IPsec SA.
Another possibility is rekying of child SA in IKEv2. In such case, the UE and the other host start using new DL and UL IPsec SAs and the old DL and UL IPsec can be released.

In some implementations, the first layer 111 determines that correspondence changed based on application layer configuration or based on usage ok IKEv2 protocol. In some implementations, the derived QoS rules are created based on received DL user data packets and have a timers T3583 associated with them. The timer T3583 associated with a derived QoS rule is restarted whenever a DL user data packet related to the QoS rule is received. See for example clause 6.2.5.1.4.4 of 3GPP TS 24.501.

There are many possibilities for the downlink SA and the uplink SA. In some implementations, the downlink SA is a downlink IPsec (Internet Protocol Security) SA, and the uplink SA is an uplink IPsec SA. This can enable a framework for securely exchanging data over unprotected networks which might be advantageous over other implementations. For IPsec implementations, the downlink packets can be downlink ESP (Encapsulating Security Payload) packets, and the uplink packets can be uplink ESP packets. However, other implementations are possible other than IPsec implementations.

There are many possibilities for the first layer and the second layer. In some implementations, the first layer is an application layer and the second layer is an NAS (Non-Access Stratum) layer. However, as already noted above, other implementations are possible.

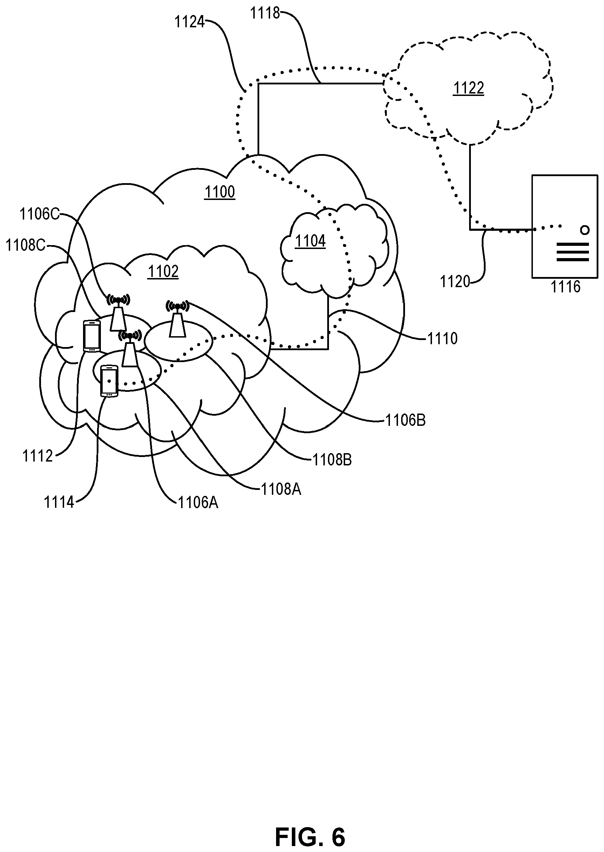

In some implementations, the downlink packets and/or the uplink packets are part of an OTT (Over-the-Top) media service connection with a host computer (e.g. one or more of the hosts 161-163 shown in Figure 1). An OTT media service can bypass traditional platforms (e.g. cable, broadcast, and satellite television platforms) in order to provide service directly to viewers via the Internet or other packet network. Example OTT implementation details are provided later with reference to Figure 6. In other implementations, the downlink packets and the uplink packets are not part of an OTT media service connection.

According to another embodiment of the disclosure, there is provided a non-transitory computer readable medium having recorded thereon statements and instructions that, when executed by the processor 121 of the communication device 100, implement a method as described herein. The non-transitory computer readable medium can be the memory 122 of the communication device 100 shown in Figure 1, or some other non-transitory computer readable medium. Examples of a non-transitory computer readable medium include an SSD (Solid State Drive), a hard disk drive, a CD (Compact Disc), a DVD (Digital Video Disc), a BD (Blu-ray Disc), a memory stick, etc. Other non-transitory computer readable mediums are also possible.

Further example details are provided in the following sections. It is to be understood that the following sections are very specific and are provided merely for exemplary purposes, such that other implementations are possible and within the scope of the disclosure.

### Further Details

The NAS layer can create derived QoS rules for ESP packets, when uplink IPsec SA (to be used in the derived QoS rule) and downlink IPsec SA (present in the downlink ESP packet) are created in application layer. The NAS layer keeps the information about the IPsec SAs corresponding to downlink IPsec SAs, as created in the application layer, based on AT commands received from the application layer. Note that the NAS layer itself can keep information about the IPsec SAs corresponding to downlink IPsec SAs, when those IPsec SAs are created in NAS layer (or in MT).

The application layer uses the AT command to keep the NAS layer up to date on uplink IPsec SAs corresponding to downlink IPsec SAs, created in the application layer. When an uplink IPsec SA corresponding to a downlink IPsec SA is created in the application layer, the application layer informs the NAS layer using AT command with type *"the uplink IPsec SA corresponds to the downlink IPsec SA",* and including SPI of the uplink IPsec SA and SPI of the downlink IPsec SA. NAS layer memorizes that the uplink IPsec SA (identified by SPI of the uplink IPsec SA) corresponds to the downlink IPsec SA (identified by SPI of the downlink IPsec SA).

When an uplink IPsec SA was corresponding to a downlink IPsec SA in the application layer, any one or both of those IPsec SAs is deleted in application, the application layer informs the NAS layer using AT command with type "the uplink IPsec SA no longer corresponds to the downlink IPsec SA", and including SPI of the uplink IPsec SA and SPI of the downlink IPsec SA. NAS layer discards previously memorized information, if any, that the uplink IPsec SA (identified by SPI of the uplink IPsec SA) corresponds to the downlink IPsec SA (identified by SPI of the downlink IPsec SA).

When the application layer removes all IPsec SAs (e.g. when application layer restarts), the application layer informs the NAS layer using AT command with type "no uplink IPsec SA corresponds to any downlink IPsec SA". NAS layer discards any previously memorized information on any uplink IPsec SA corresponding to any downlink IPsec SA. Note that the NAS layer uses the memorized information when creating derived QoS rules for ESP packets.

### Example AT Commands

As noted above, the message that is sent at step 2-2 of Figure 2 can be an AT command in some implementations. Specific examples of such AT command are provided below with reference to Tables 1 and 2. These specific examples demonstrate how some aspects disclosed herein could be implemented within a framework of one or more standards, for example 3GPP TS 27.007, "AT command set for User Equipment (UE)", version 18.1.0 dated 2023-01-02 (hereinafter "3GPP TS 27.007"). However, the aspects disclosed herein could also be implemented in other suitable manners, both in the aforementioned standards and in other specifications or standards. It is to be understood that the AT command described below with reference to Tables 1 and 2 are very specific and are provided for exemplary purposes only.

Table 1 below is an example command message for conveying correspondence information for an uplink IPsec SA corresponding to a downlink IPsec SA for unicast ESP +CUISDISUE2NAS.

**Table 1: +CUISDISUE2NAS parameter command syntax**

| Command | Possible Response(s) |
|---|---|
| +CUISDISUE2NAS=<cid>,[<type>],[<local_ipv4_address>], [<local_ipv6_address>], [<local_UDP_port>], [<remote_ipv4_address>], [<remote_ipv6_address>], [<remote_UDP_port>], [<DL_IPsec_SA_SPI>],[<UL_IPsec_SA_SPI>]+CUISDISUE2NAS=? | *+CME ERROR: <err>* |

The command of Table 1 allows the TE to provide information on an uplink IPSec SA corresponding to a downlink IPsec SA, in the TE, see 3GPP TS 24.501, to TA/MT, where:
- the downlink IPsec SA uses EPS to protect IP packets to be sent from a remote IP address, and, if UDP encapsulation of ESP packets as specified in IETF (Internet Engineering Task Force) RFC (Request for Comments) 3948 dated January 2005 (hereinafter "IETF RFC3948") is used, a remote UDP port, to a local IP address, and, if UDP encapsulation of ESP packets as specified in IETF RFC3948 is used, a local UDP port; and
- the uplink IPsec SA uses EPS to protect IP packets to be sent from the local IP address, and, if UDP encapsulation of ESP packets as specified in IETF RFC3948 is used, the local UDP port, to the remote IP address, and, if UDP encapsulation of ESP packets as specified in IETF RFC3948 is used, the remote UDP port.
Refer clause 9.2 of 3GPP TS 27.007 for possible <err> values.

Defined values of the command of Table 1 are listed below:
<cid>: integer type, specifies a particular PDP context definition (see the +CGDCONT and +CGDSCONT commands).
<type>: integer type, identifies type of provided information:
   0 no uplink IPsec SA corresponds to any downlink IPsec SA.
   1 the uplink IPsec SA corresponds to the downlink IPsec SA.
   2 the uplink IPsec SA no longer corresponds to the downlink IPsec SA.
<local_ipv4_address>: string type, given as dot-separated numeric (0-255) parameters which indicate a local IPv4 address, in the form of "a1.a2.a3.a4". When the <type> parameter is set to value 1 or 2, and the uplink IPsec SA and the downlink IPsec SA protect IPv4 packets, then this parameter is present, otherwise this parameter is absent.
<local_ipv6_address>: string type, given as dot-separated numeric (0-255) parameters which indicate a local IPv6 address, in the form of "a1.a2.a3.a4.a5.a6.a7 .a8.a9.a10.a11.a12.a13.a14.a15.a16". When the <type> parameter is set to value 1 or 2, and the uplink IPsec SA and the downlink IPsec SA protect IPv6 packets, then this parameter is present, otherwise this parameter is absent.
<local_UDP_port>: integer type, with value range from 0 to 65535, which indicates a local UDP port. When the <type> parameter is set to value 1 or 2, and UDP encapsulation of ESP packets as specified in IETF RFC3948 is used, then this parameter is present, otherwise this parameter is absent.
<remote_ipv4_address>: string type, given as dot-separated numeric (0-255) parameters which indicate a remote IPv4 address, in the form of "a1.a2.a3.a4". When the <type> parameter is set to value 1 or 2, and the uplink IPsec SA and the downlink IPsec SA protect IPv4 packets, then this parameter is present, otherwise this parameter is absent.
<remote_ipv6_address>: string type, given as dot-separated numeric (0-255) parameters which indicate a remote IPv6 address, in the form of "a1.a2.a3.a4.a5.a6.a7 .a8.a9.a10.a11.a12.a13.a14.a15.a16". When the <type> parameter is set to value 1 or 2, and the uplink IPsec SA and the downlink IPsec SA protect IPv6 packets, then this parameter is present, otherwise this parameter is absent.
<remote_UDP_port>: integer type, with value range from 0 to 65535, which indicates a remote UDP port. When the <type> parameter is set to value 1 or 2, and UDP encapsulation of ESP packets as specified in IETF RFC3948 is used, then this parameter is present, otherwise this parameter is absent.
<DL_IPsec_SA_SPI>: string type, contains an SPI of the downlink IPsec SA, encoded using eight hexadecimal digits. The first digit is the most significant digit. When the
<type> parameter is set to value 1 or 2, then this parameter is present otherwise this parameter is absent.
<UL_IPsec_SA_SPI>: string type, contains an SPI of the uplink IPsec SA, encoded using eight hexadecimal digits. The first digit is the most significant digit. When the
<type> parameter is set to value 1 or 2, then this parameter is present otherwise this parameter is absent.

Table 2 below is another example command message for conveying correspondence information which may include information for reflective QoS for ESP +CIRQE.

**Table 2: +CIRQE parameter command syntax**

| Command | Possible Response(s) |
|---|---|
| +CIRQE=<cid> [, <mode>, <protocol number (ipv4) / next header (ipv6)>, <local_address>, <remote_address>, <DL_IPsec_SA_SPI>, <UL_IPsec_SA_SPI> [, <local_UDP_port>, <remote_UDP_port>]] | *+CME ERROR: <err>* |
| +CIRQE=? | |

The command of Table 2 allows the TE to provide information about an uplink IPSec SA corresponding to a downlink IPsec SA, in the TE, for the reflective QoS for ESP, along with other information for an UL packet filter of a derived QoS rule for ESP, see 3GPP TS 24.501, to TA/MT, depending whether the UDP encapsulation of ESP packets as specified in IETF RFC3948 is used.

A special form of the set command, +CIRQE=<cid> indicates that no uplink IPsec SA corresponds to any downlink IPsec SA for the particular <cid>. Refer clause 9.2 of 3GPP TS 27.007 for possible <err> values.

Defined values of the command of Table 2 are listed below:
<cid>: integer type, specifies a particular PDP context definition (see the +CGDCONT and +CGDSCONT commands).
<mode>: integer type, identifies mode of provided information:
   1 a new association between the uplink IPsec SA and the downlink IPsec SA is created.
   2 an existing assocation between the uplink IPsec SA and the downlink IPsec SA is removed.
<protocol number (ipv4) / next header (ipv6)>: integer type, indicating the next level protocol, with value range from 0 to 255, where value 50 (decimal) indicates "ESP", value 17 (decimal) indicates "UDP". When <protocol number (ipv4) / next header (ipv6)> is set to "UDP", the UDP encapsulation of ESP packets as specified in IETF RFC3948 is used for user data packets of the downlink and uplink IPsec SAs.
<local_address>: string type, given as dot-separated numeric (0-255) parameters which indicate a local address, in the form of:
   - "a1.a2.a3.a4", for IPv4; or
   - "a1.a2.a3.a4.a5.a6.a7 .a8.a9.a10.a11.a12.a13.a14.a15.a16", for IPv6.
<remote_address>: string type, given as dot-separated numeric (0-255) parameters which indicate a remote address, in the form of:
   - "a1.a2.a3.a4", for IPv4; or
   - "a1.a2.a3.a4.a5.a6.a7 .a8.a9.a10.a11.a12.a13.a14.a15.a16", for IPv6.
<DL_IPsec_SA_SPI>: string type, contains an SPI of the downlink IPsec SA, encoded using eight hexadecimal digits. The first digit is the most significant digit.
<UL_IPsec_SA_SPI>: string type, contains an SPI of the uplink IPsec SA, encoded using eight hexadecimal digits. The first digit is the most significant digit.
<local_UDP_port>: integer type, with value range from 0 to 65535, which indicates a local UDP port. When the <protocol number (ipv4) / next header (ipv6)> indicates "UDP" then the <local_UDP_port> parameter is present otherwise the <local_UDP_port> parameter is absent.
<remote_UDP_port>: integer type, with value range from 0 to 65535, which indicates a remote UDP port. When the <protocol number (ipv4) / next header (ipv6)> indicates "UDP" then the <remote_UDP_port> parameter is present otherwise the <remote_UDP_port> parameter is absent.

Relative to the command of Table 1, the command of Table 2 is named to indicate that it provides information for reflective QoS for ESP. Also, syntax of the command defines parameters which are mandatory except the special form of the set command, +CIDQRE=<cid>, are indicated first, and together. Other differences include:
- <type> is split to <mode> and <protocol number (ipv4) / next header (ipv6)>. <protocol number (ipv4) / next header (ipv6)> indicates whether the ESP traffic uses ESP transport or EPS over UDP transport;
- IPv4 and IPv6 local addresses are indicate by one parameter;
- IPv4 and IPv6 remote addresses are indicate by one parameter;
- text is simplified as dependencies between parameters (except <local_UDP_port> and <remote_UDP_port>) are indicate in syntax of AT command; and
- additional cosigner added.

### Communication System

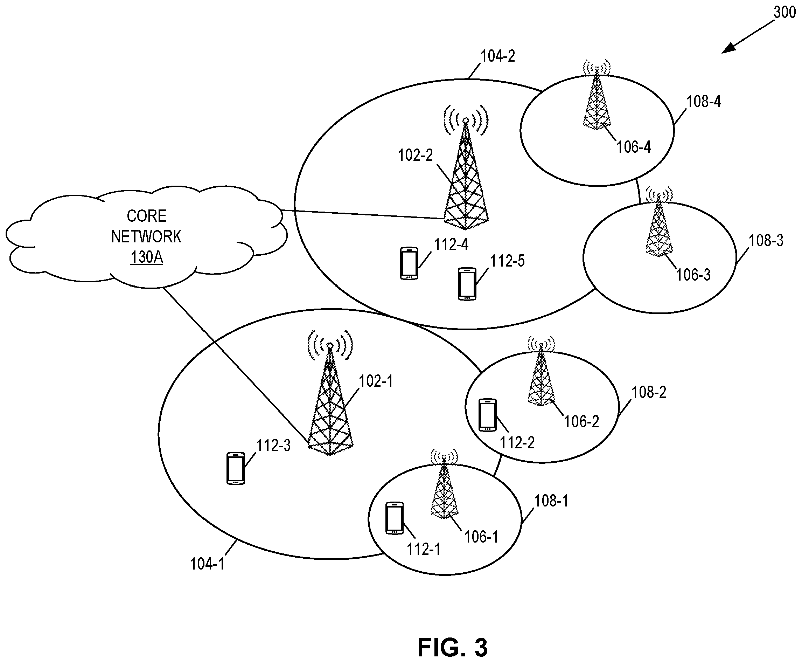

Figure 3 illustrates one example of a cellular communications system 300 in which embodiments of the present disclosure might be implemented. In the embodiments described herein, the cellular communications system 300 is a 5GS (5G system) including an NG-RAN (Next Generation RAN) and a 5GC (5G Core). In this example, the RAN includes base stations 102-1 and 102-2, which in the 5GS include gNBs (NR Base Stations) and optionally ng-eNBs (Next Generation eNBs) (e.g., LTE RAN nodes connected to the 5GC), controlling corresponding (macro) cells 104-1 and 104-2. The base stations 102-1 and 102-2 are generally referred to herein collectively as base stations 102 and individually as base station 102. Likewise, the (macro) cells 104-1 and 104-2 are generally referred to herein collectively as (macro) cells 104 and individually as (macro) cell 104. The RAN might also include a number of low power nodes 106-1 through 106-4 controlling corresponding small cells 108-1 through 108-4. The low power nodes 106-1 through 106-4 can be small base stations (such as pico or femto base stations) or RRHs (Remote Radio Heads), or the like. Notably, while not illustrated, one or more of the small cells 108-1 through 108-4 might alternatively be provided by the base stations 102. The low power nodes 106-1 through 106-4 are generally referred to herein collectively as low power nodes 106 and individually as low power node 106. Likewise, the small cells 108-1 through 108-4 are generally referred to herein collectively as small cells 108 and individually as small cell 108. The cellular communications system 300 also includes a core network 130A, which in the 5G System is referred to as the 5GC. The base stations 102 (and optionally the low power nodes 106) are connected to the core network 130A.

The base stations 102 and the low power nodes 106 provide service to wireless communication devices 112-1 through 112-5 in the corresponding cells 104 and 108. The wireless communication devices 112-1 through 112-5 are generally referred to herein collectively as wireless communication devices 112 and individually as wireless communication device 112. In the following description, the wireless communication devices 112 are oftentimes UEs, but the present disclosure is not limited thereto.

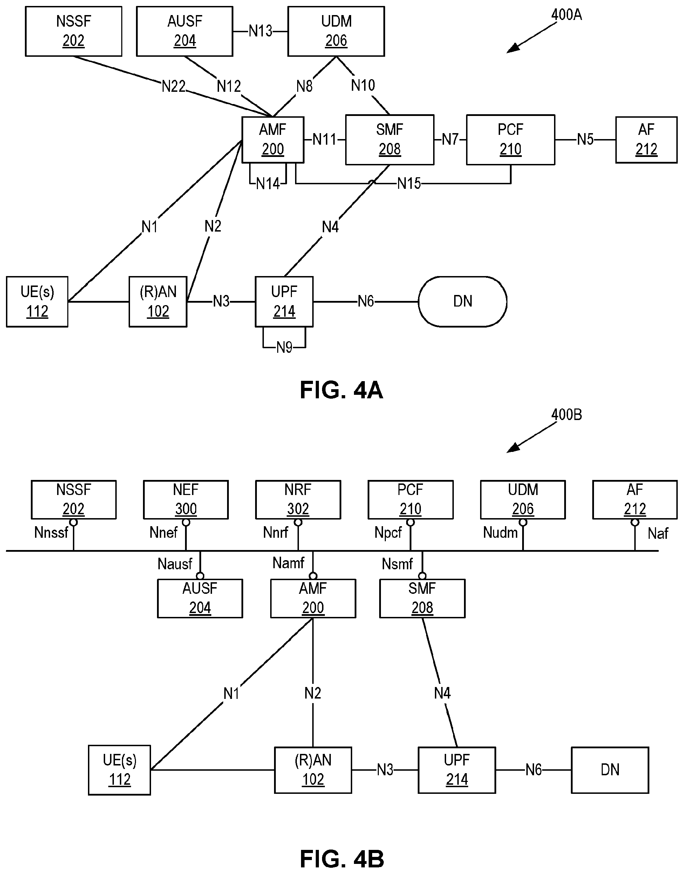

Figure 4A illustrates a wireless communication system 400A represented as a 5G network architecture composed of core NFs (Network Functions), where interaction between any two NFs is represented by a point-to-point reference point/interface. Figure 4A can be viewed as one particular implementation of the system 300 of Figure 3.

Seen from the access side the 5G network architecture shown in Figure 4A comprises a plurality of UEs 112 connected to either a RAN 102 or an (Access Network) as well as an AMF (Access and Mobility Management Function) 200. Typically, the R(AN) 102 comprises base stations, e.g. such as eNBs or gNBs or similar. Seen from the core network side, the 5GC NFs shown in Figure 4A include a NSSF (Network Slice Selection Function) 202, an AUSF (Authentication Server Function) 204, a UDM (Unified Data Management) 206, the AMF 200, a SMF (Session Management Function) 208, a PCF (Policy Control Function) 210, and an AF (Application Function) 212.

Reference point representations of the 5G network architecture are used to develop detailed call flows in the normative standardization. The N1 reference point is defined to carry signaling between the UE 112 and AMF 200. The reference points for connecting between the AN 102 and AMF 200 and between the AN 102 and UPF 214 are defined as N2 and N3, respectively. There is a reference point, N11, between the AMF 200 and SMF 208, which implies that the SMF 208 is at least partly controlled by the AMF 200. N4 is used by the SMF 208 and UPF 214 so that the UPF 214 can be set using the control signal generated by the SMF 208, and the UPF 214 can report its state to the SMF 208. N9 is the reference point for the connection between different UPFs 214, and N14 is the reference point connecting between different AMFs 200, respectively. N15 and N7 are defined since the PCF 210 applies policy to the AMF 200 and SMF 208, respectively. N12 is present for the AMF 200 to perform authentication of the UE 112. N8 and N10 are defined because the subscription data of the UE 112 is used for the AMF 200 and SMF 208.

The 5GC network aims at separating UP and CP. The UP carries user traffic while the CP carries signaling in the network. In Figure 4A, the UPF 214 is in the UP and all other NFs, i.e., the AMF 200, SMF 208, PCF 210, AF 212, NSSF 202, AUSF 204, and UDM 206, are in the CP. Separating the UP and CP guarantees each plane resource to be scaled independently. It also allows UPFs to be deployed separately from CP functions in a distributed fashion. In this architecture, UPFs might be deployed very close to UEs to shorten the RTT (Round Trip Time) between UEs and data network for some applications with low latency.

The core 5G network architecture is composed of modularized functions. For example, the AMF 200 and SMF 208 are independent functions in the CP. Separated AMF 200 and SMF 208 allow independent evolution and scaling. Other CP functions like the PCF 210 and AUSF 204 can be separated as shown in Figure 4A. Modularized function design enables the 5GC network to support various services flexibly.

Each NF interacts with another NF directly. It is possible to use intermediate functions to route messages from one NF to another NF. In the CP, a set of interactions between two NFs is defined as service so that its reuse is possible. This service enables support for modularity. The UP supports interactions such as forwarding operations between different UPFs.

Figure 4B illustrates a 5G network architecture 400B using service-based interfaces between the NFs in the CP, instead of the point-to-point reference points/interfaces used in the 5G network architecture of Figure 4A. However, the NFs described above with reference to Figure 4A correspond to the NFs shown in Figure 4B. The service(s) etc. that a NF provides to other authorized NFs can be exposed to the authorized NFs through the service-based interface. In Figure 4B the service-based interfaces are indicated by the letter "N" followed by the name of the NF, e.g. Namf for the service-based interface of the AMF 200 and Nsmf for the service-based interface of the SMF 208, etc. The NEF 300 and the NRF 302 in Figure 4B are not shown in Figure 4A discussed above. However, it should be clarified that all NFs depicted in Figure 4A can interact with the NEF 300 and the NRF 302 of Figure 4B as necessary, though not explicitly indicated in Figure 4A.

Some properties of the NFs shown in Figures 4A and 4B might be described in the following manner. The AMF 200 provides UE-based authentication, authorization, mobility management, etc. A UE 112 even using multiple access technologies is basically connected to a single AMF 200 because the AMF 200 is independent of the access technologies. The SMF 208 is responsible for session management and allocates IP (Internet Protocol) addresses to UEs. It also selects and controls the UPF 214 for data transfer. If a UE 112 has multiple sessions, different SMFs 208 might be allocated to each session to manage them individually and possibly provide different functionalities per session. The AF 212 provides information on the packet flow to the PCF 210 responsible for policy control in order to support QoS. Based on the information, the PCF 210 determines policies about mobility and session management to make the AMF 200 and SMF 208 operate properly. The AUSF 204 supports authentication function for UEs or similar and thus stores data for authentication of UEs or similar while the UDM 206 stores subscription data of the UE 112. The DN (Data Network), not part of the 5GC network, provides Internet access or operator services and similar.

An NF might be implemented either as a network element on a dedicated hardware, as a software instance running on a dedicated hardware, or as a virtualized function instantiated on an appropriate platform, e.g., a cloud infrastructure.

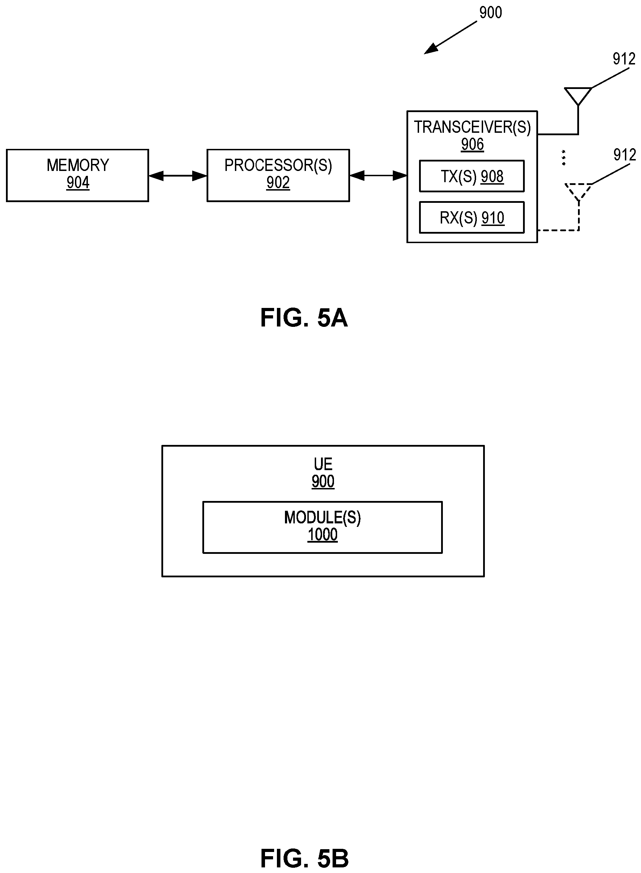

Figure 5A is a schematic block diagram of a wireless communication device 900 according to some embodiments of the present disclosure. As illustrated, the wireless communication device 900 includes one or more processors 902 (e.g., CPUs, ASICs, FPGAs, and/or the like), memory 904, and one or more transceivers 906 each including one or more transmitters 908 and one or more receivers 910 coupled to one or more antennas 912. The transceiver(s) 906 includes radio-front end circuitry connected to the antenna(s) 912 that is configured to condition signals communicated between the antenna(s) 912 and the processor(s) 902, as will be appreciated by on of ordinary skill in the art. The processors 902 are also referred to herein as processing circuitry. The transceivers 906 are also referred to herein as radio circuitry. In some embodiments, the functionality of the wireless communication device 900 described above might be fully or partially implemented in software that is, e.g., stored in the memory 904 and executed by the processor(s) 902. Note that the wireless communication device 900 might include additional components not illustrated in Figure 5A such as, e.g., one or more user interface components (e.g., an input/output interface including a display, buttons, a touch screen, a microphone, a speaker(s), and/or the like and/or any other components for allowing input of information into the wireless communication device 900 and/or allowing output of information from the wireless communication device 900), a power supply (e.g., a battery and associated power circuitry), etc.

In some embodiments, a computer program including instructions which, when executed by at least one processor, causes the at least one processor to carry out the functionality of the wireless communication device 900 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 5B is a schematic block diagram of the wireless communication device 900 according to some other embodiments of the present disclosure. The wireless communication device 900 includes one or more modules 1000, each of which is implemented in software. The module(s) 1000 provide the functionality of the wireless communication device 900 described herein.

Figure 6 is a schematic of an example communication system according to some embodiments of the present disclosure. Each base station 1106A, 1106B, 1106C is connectable to the core network 1104 over a wired or wireless connection 1110. A first UE 1112 located in coverage area 1108C is configured to wirelessly connect to, or be paged by, the corresponding base station 1106C. A second UE 1114 in coverage area 1108A is wirelessly connectable to the corresponding base station 1106A. While a plurality of UEs 1112, 1114 are illustrated in this example, the disclosed embodiments are equally applicable to a situation where a sole UE is in the coverage area or where a sole UE is connecting to the corresponding base station 1106.

The telecommunication network 1100 is itself connected to a host computer 1116, which might be embodied in the hardware and/or software of a standalone server, a cloud-implemented server, a distributed server, or as processing resources in a server farm. The host computer 1116 might be under the ownership or control of a service provider, or might be operated by the service provider or on behalf of the service provider. Connections 1118 and 1120 between the telecommunication network 1100 and the host computer 1116 might extend directly from the core network 1104 to the host computer 1116 or might go via an optional intermediate network 1122. The intermediate network 1122 might be one of, or a combination of more than one of, a public, private, or hosted network; the intermediate network 1122, if any, might be a backbone network or the Internet; in particular, the intermediate network 1122 might comprise two or more sub-networks (not shown).

The communication system of Figure 6 as a whole enables connectivity between the connected UEs 1112, 1114 and the host computer 1116. The connectivity might be described as an OTT (Over-the-Top) connection 1124. The host computer 1116 and the connected UEs 1112, 1114 are configured to communicate data and/or signaling via the OTT connection 1124, using the access network 1102, the core network 1104, any intermediate network 1122, and possible further infrastructure (not shown) as intermediaries. The OTT connection 1124 might be transparent in the sense that the participating communication devices through which the OTT connection 1124 passes are unaware of routing of uplink and downlink communications. For example, the base station 1106 might not or need not be informed about the past routing of an incoming downlink communication with data originating from the host computer 1116 to be forwarded (e.g., handed over) to a connected UE 1112. Similarly, the base station 1106 need not be aware of the future routing of an outgoing uplink communication originating from the UE 1112 towards the host computer 1116.

Any appropriate steps, methods, features, functions, or benefits disclosed herein might be performed through one or more functional units or modules of one or more virtual apparatuses. Each virtual apparatus might comprise a number of these functional units. These functional units might be implemented via processing circuitry, which might include one or more microprocessor or microcontrollers, as well as other digital hardware, which might include DSPs (Digital Signal Processor), special-purpose digital logic, and the like. The processing circuitry might be configured to execute program code stored in memory, which might include one or several types of memory such as ROM (Read Only Memory), RAM (Random Access Memory), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry might be used to cause the respective functional unit to perform corresponding functions according one or more embodiments of the present disclosure.

Numerous modifications and variations of the present disclosure are possible in light of the above teachings. It is therefore to be understood that within the scope of the appended claims, the disclosure might be practised otherwise than as specifically described herein.

## Claims

1. A method for execution by a communication device (100) having a plurality of abstraction layers (111, 112) including a first layer (111) and a second layer (112) at a lower level than the first layer (111), the method comprising:
provisioning, by the first layer (111), a downlink Security Association, SA, and an uplink SA for a logical connection between the communication device (100) and a network (140);
sending, from the first layer (111) to the second layer (112), a message comprising correspondence information for the downlink SA and the uplink SA;
receiving, by the communication device (100) from the network (140), downlink packets over the logical connection;
generating, by the second layer (112), Quality of Service, QoS, rules for uplink packets based on a combination of the correspondence information and the downlink packets; and
transmitting, by the communication device (100) to the network (140), uplink packets over the logical connection in accordance with the QoS rules.

2. The method of claim 1, wherein the correspondence information comprises a Security Parameters Index, SPI, of the downlink SA, an SPI of the uplink SA, a local Internet Protocol, IP, address, a remote IP address, a local User Datagram Protocol, UDP, port and a remote UDP port.

3. The method of claim 1 or claim 2, wherein the correspondence information comprises an indication that
the uplink SA corresponds to the downlink SA.

4. The method of any one of claims 1 to 3, further comprising, in response to the correspondence information indicating that the uplink SA no longer corresponds to the downlink SA, discarding, by the second layer (112), previously stored correspondence information that the uplink SA corresponds to the downlink SA, and optionally
further comprising, in response to the correspondence information indicating that no uplink SA corresponds to any downlink SA, discarding, by the second layer (112), any previously stored correspondence information for uplink SAs corresponding to downlink SAs.

5. The method of any one of claims 1 to 4, wherein the message is sent from the first layer (111) to the second layer (112) without any request by the second layer (112) for the message.

6. The method of any one of claims 1 to 4, wherein the message is sent from the first layer (111) to the second layer (112) in response to a request by the second layer (112) for the message.

7. The method of any one of claims 1 to 6, wherein the message is a first message, and the method further comprises:
detecting, by the first layer (111), a change in correspondence;
sending, from the first layer (111) to the second layer (112), a second message indicating the change in correspondence; and
updating, by the second layer (112), the QoS rules based on the change in correspondence.

8. The method of claim 7, wherein the second message (112) has a same format as the first message.

9. The method of any one of claims 1 to 8, wherein the downlink SA and the uplink SA are provisioned by the first layer (111) using Internet Key Exchange version 2 protocol, IKEv2 protocol.

10. The method of any one of claims 1 to 9, wherein:
the downlink SA is a downlink Internet Protocol Security SA, IPsec SA, and the uplink SA is an uplink IPsec SA; and
the downlink packets are downlink Encapsulating Security Payload, ESP, packets, and the uplink packets are uplink ESP packets.

11. The method of any one of claims 1 to 10, wherein the first layer (111) is an application layer and the second layer (112) is a Non-Access Stratum layer, NAS layer.

12. The method of any one of claims 1 to 11, wherein the message is an Attention command, AT command, of a plurality of AT commands that have been defined for controlling transmissions.

13. The method of any one of claims 1 to 12, wherein the downlink packets and/or the uplink packets are part of an Over-the-Top, OTT, media service connection with a host computer (160).

14. A non-transitory computer readable medium (122) having recorded thereon statements and instructions that, when executed by a processor (121) of a communication device (100), configure the processor (121) to implement a method according to any of claims 1 to 13.

15. A communication device (100) configured to implement a method according to any of claims 1 to 13.

## Patentansprüche

1. Verfahren zur Ausführung durch eine Kommunikationsvorrichtung (100) mit einer Mehrzahl von Abstraktionsschichten (111, 112), die eine erste Schicht (111) und eine zweite Schicht (112) auf einer niedrigeren Ebene als die erste Schicht (111) umfassen, wobei das Verfahren Folgendes umfasst:
Bereitstellen einer Downlink-Sicherheitsvereinbarung, Downlink-SA, und einer Uplink-SA für eine logische Verbindung zwischen der Kommunikationsvorrichtung (100) und einem Netzwerk (140) durch die erste Schicht (111);
Senden einer Nachricht, die Entsprechungsinformationen für die Downlink-SA und die Uplink-SA umfasst, von der ersten Schicht (111) an die zweite Schicht (112);
Empfangen von Downlink-Paketen durch die Kommunikationsvorrichtung (100) über die logische Verbindung von dem Netzwerk (140);
Erzeugen von Dienstqualitätsregeln, QoS-Regeln, für Uplink-Pakete durch die zweite Schicht (112) basierend auf einer Kombination aus den Entsprechungsinformationen und den Downlink-Paketen; und
Übertragen von Uplink-Paketen durch die Kommunikationsvorrichtung (100) gemäß den QoS-Regeln über die logische Verbindung an das Netzwerk (140).

2. Verfahren nach Anspruch 1, wobei die Entsprechungsinformationen einen Sicherheitsparameterindex, SPI, der Downlink-SA, einen SPI der Uplink-SA, eine lokale Internetprotokoll-Adresse, IP-Adresse, eine Remote-IP-Adresse, einen lokalen User Datagram Protocol-Port, UDP-Port, und einen Remote-UDP-Port umfassen.

3. Verfahren nach Anspruch 1 oder 2, wobei die Entsprechungsinformationen eine Angabe umfassen, dass die Uplink-SA der Downlink-SA entspricht.

4. Verfahren nach einem der Ansprüche 1 bis 3, ferner umfassend in Reaktion darauf, dass die Entsprechungsinformationen angeben, dass die Uplink-SA nicht mehr der Downlink-SA entspricht, Verwerfen von zuvor gespeicherten Entsprechungsinformationen, dass die Uplink-SA der Downlink-SA entspricht, durch die zweite Schicht (112) und optional
ferner umfassend in Reaktion darauf, dass die Entsprechungsinformationen angeben, dass keine Uplink-SA einer Downlink-SA entspricht, Verwerfen jeglicher zuvor gespeicherter Entsprechungsinformationen für Uplink-SAs, die Downlink-SAs entsprechen, durch die zweite Schicht (112).

5. Verfahren nach einem der Ansprüche 1 bis 4, wobei die Nachricht von der ersten Schicht (111) ohne jegliche Anforderung der Nachricht von der zweiten Schicht (112) an die zweite Schicht (112) gesendet wird.

6. Verfahren nach einem der Ansprüche 1 bis 4, wobei die Nachricht von der ersten Schicht (111) in Reaktion auf eine Anforderung der Nachricht von der zweiten Schicht (112) an die zweite Schicht (112) gesendet wird.

7. Verfahren nach einem der Ansprüche 1 bis 6, wobei die Nachricht eine erste Nachricht ist und das Verfahren ferner Folgendes umfasst:
Erkennen einer Änderung der Entsprechung durch die erste Schicht (111);
Senden einer zweiten Nachricht, die die Änderung der Entsprechung angibt, von der ersten Schicht (111) an die zweite Schicht (112); und
Aktualisieren der QoS-Regeln durch die zweite Schicht (112) basierend auf der Änderung der Entsprechung.

8. Verfahren nach Anspruch 7, wobei die zweite Nachricht (112) dasselbe Format wie die erste Nachricht aufweist.

9. Verfahren nach einem der Ansprüche 1 bis 8, wobei die Downlink-SA und die Uplink-SA von der ersten Schicht (111) unter Verwendung des Internet Key Exchange Version 2-Protokolls, IKEv2-Protokolls, bereitgestellt werden.

10. Verfahren nach einem der Ansprüche 1 bis 9, wobei:
die Downlink-SA eine Downlink-Internet-Protocol-Security-SA, IPsec-SA, ist und die Uplink-SA eine Uplink-IPsec-SA ist; und
die Downlink-Pakete Downlink-Encapsulating-Security-Payload-Pakete, ESP-Pakete, sind und die Uplink-Pakete Uplink-ESP-Pakete sind.

11. Verfahren nach einem der Ansprüche 1 bis 10, wobei die erste Schicht (111) eine Anwendungsschicht ist und die zweite Schicht (112) eine Non-Access Stratum-Schicht, NAS-Schicht, ist.

12. Verfahren nach einem der Ansprüche 1 bis 11, wobei die Nachricht ein Attention-Befehl, AT-Befehl, einer Mehrzahl von AT-Befehlen ist, die zum Steuern von Übertragungen definiert wurden.

13. Verfahren nach einem der Ansprüche 1 bis 12, wobei die Downlink-Pakete und/oder die Uplink-Pakete Teil einer Over-the-Top-Mediendienstverbindung, OTT-Mediendienstverbindung, mit einem Hostcomputer (160) sind.

14. Nicht-transitorisches computerlesbares Medium (122), das Aussagen und Anweisungen darauf aufgezeichnet aufweist, die, wenn sie von einem Prozessor (121) einer Kommunikationsvorrichtung (100) ausgeführt werden, den Prozessor (121) dazu konfigurieren, ein Verfahren nach einem der Ansprüche 1 bis 13 zu implementieren.

15. Kommunikationsvorrichtung (100), die zum Implementieren des Verfahrens nach einem der Ansprüche 1 bis 13 konfiguriert ist.

## Revendications

1. Procédé d'exécution par un dispositif de communication (100) présentant une pluralité de couches d'abstraction (111, 112) incluant une première couche (111) et une deuxième couche (112) à un niveau inférieur à la première couche (111), le procédé comprenant :
la fourniture, par la première couche (111), d'une association de sécurité, SA, de liaison descendante et d'une SA de liaison montante pour une connexion logique entre le dispositif de communication (100) et un réseau (140) ;
l'envoi, de la première couche (111) à la deuxième couche (112), d'un message comprenant des informations de correspondance pour la SA de liaison descendante et la SA de liaison montante ;
la réception, par le dispositif de communication (100) depuis le réseau (140), de paquets de liaison descendante sur la connexion logique ;
la génération, par la deuxième couche (112), de règles de qualité de service, QoS, pour des paquets de liaison montante sur la base d'une combinaison des informations de correspondance et des paquets de liaison descendante ; et
la transmission, par le dispositif de communication (100) au réseau (140), de paquets de liaison montante sur la connexion logique selon les règles de QoS.

2. Procédé selon la revendication 1, dans lequel les informations de correspondance comprennent un indice de paramètres de sécurité, SPI, de la SA de liaison descendante, un SPI de la SA de liaison montante, une adresse de protocole Internet, IP, locale, une adresse IP distante, un port de protocole de datagramme utilisateur, UDP, local et un port UDP distant.

3. Procédé selon la revendication 1 ou 2, dans lequel les informations de correspondance comprennent une indication que la SA de liaison montante correspond à la SA de liaison descendante.

4. Procédé selon l'une quelconque des revendications 1 à 3, comprenant en outre, en réponse aux informations de correspondance indiquant que la SA de liaison montante ne correspond plus à la SA de liaison descendante, le rejet, par la deuxième couche (112), d'informations de correspondance précédemment stockées indiquant que la SA de liaison montante correspond à la SA de liaison descendante, et facultativement
comprenant en outre, en réponse au fait que les informations de correspondance indiquent qu'aucune SA de liaison montante ne correspond à une quelconque SA de liaison descendante, le rejet, par la deuxième couche (112), de toutes les informations de correspondance précédemment stockées indiquant que des SA de liaison montante correspondent à des SA de liaison descendante.

5. Procédé selon l'une quelconque des revendications 1 à 4, dans lequel le message est envoyé de la première couche (111) à la deuxième couche (112) sans aucune demande du message par la deuxième couche (112).

6. Procédé selon l'une quelconque des revendications 1 à 4, dans lequel le message est envoyé de la première couche (111) à la deuxième couche (112) en réponse à une demande du message par la deuxième couche (112).

7. Procédé selon l'une quelconque des revendications 1 à 6, dans lequel le message est un premier message, et le procédé comprend en outre :
la détection, par la première couche (111), d'un changement de correspondance ;
l'envoi, de la première couche (111) à la deuxième couche (112), d'un deuxième message indiquant le changement de correspondance ; et
la mise à jour, par la deuxième couche (112), des règles de QoS sur la base du changement de correspondance.

8. Procédé selon la revendication 7, dans lequel le deuxième message (112) présente un même format que le premier message.

9. Procédé selon l'une quelconque des revendications 1 à 8, dans lequel la SA de liaison descendante et la SA de liaison montante sont fournies par la première couche (111) à l'aide d'un protocole d'échange de clés Internet de version 2, IKEv2.

10. Procédé selon l'une quelconque des revendications 1 à 9, dans lequel :
la SA de liaison descendante est une SA de sécurité de protocole Internet, SA IPsec, de liaison descendante et la SA de liaison montante est une SA IPsec de liaison montante ; et
les paquets de liaison descendante sont des paquets de charge utile de sécurité d'encapsulation, ESP, de liaison descendante, et les paquets de liaison montante sont des paquets ESP de liaison montante.

11. Procédé selon l'une quelconque des revendications 1 à 10, dans lequel la première couche (111) est une couche d'application et la deuxième couche (112) est une couche de strate de non-accès, NAS.

12. Procédé selon l'une quelconque des revendications 1 à 11, dans lequel le message est une commande d'attention, AT, parmi une pluralité de commandes AT qui ont été définies pour commander des transmissions.

13. Procédé selon l'une quelconque des revendications 1 à 12, dans lequel les paquets de liaison descendante et/ou les paquets de liaison montante font partie d'une connexion de service multimédia Over-the-Top, OTT, avec un ordinateur hôte (160).

14. Support non transitoire lisible par ordinateur (122) sur lequel sont stockées des déclarations et des instructions qui, lorsqu'elles sont exécutées par un processeur (121) d'un dispositif de communication (100), configurent le processeur (121) pour mettre en œuvre un procédé selon l'une quelconque des revendications 1 à 13.

15. Dispositif de communication (100) configuré pour mettre en œuvre un procédé selon l'une quelconque des revendications 1 à 13.
